# EUROPEAN PATENT APPLICATION

(11) **EP 3 101 846 A1**
(43) Date of publication of application: **07.12.2016**
(21) Application number: 14880608.6
(22) Date of filing: 29.01.2014
(51) Int. Cl.: H04L 12/70

(54) **WIRELESS COMMUNICATION NETWORK AND DEVICE**

(71) Applicant: Huawei Technologies Co., Ltd., Longgang District Shenzhen, Guangdong 518129 (CN)
(72) Inventor: LIAO, Defu, Shenzhen Guangdong 518129 (CN); ZHANG, Wei, Shenzhen Guangdong 518129 (CN); PENG, Chenghui, Shenzhen Guangdong 518129 (CN)
(74) Representative: Körber, Martin Hans
(86) International application number: PCT/CN2014/071811
(87) International publication number: WO 2015/113282

(57) **Abstract**

The present invention provides a wireless communications network and device. The wireless communications network includes: a single network controller SNC, at least one radio node RN, and at least one function node network FNN, where the SNC is configured to perform a centralized network control function and a centralized radio control function that are of a wireless communications network, the at least one RN is configured to perform a function of a base station radio remote unit RRU of at least one base station, and the FNN is operated in a system using a network function virtualization NFV technology, and is configured to perform some or all functions of wireless protocol stack access stratums of the at least one base station. According to the wireless communications network provided in the present invention, based on reasonable division of a control function and a processing function that are of the wireless communications network, a virtualized wireless communications network supports functions of base stations of various types, and centralized control and scheduling are implemented on a resource pool of the wireless communications network.

## Description

### TECHNICAL FIELD

Embodiments of the present invention relate to the field of communications technologies, and in particular, to a wireless communications network and device.

### BACKGROUND

With development of an information technology (Information Technology, IT for short), a hardware platform based on a general-purpose central processing unit (Central Processing Unit, CPU for short), such as X86, Arm, or Mips of the IT, is applied to wider fields, and even extends to the field of communications technology (Communication Technology, CT for short). Using a common platform in the CT field, for a communications vendor, can shorten a development cycle and lower product difficulty, thereby reducing development costs. For operators using communications devices, product procurement prices can also be lowered and maintenance costs can be reduced.

To use the common platform in the CT field, currently a new-type network innovation architecture - a software-defined networking (Software Defined Network, SDN for short) and network function virtualization (Network Function Virtualization, NFV for short) technology is put forward in the communications industry. The SDN is mainly characterized in that, a control plane is separated from a data plane, control planes of different network devices are centralized, and centralized control is performed by a centralized control device. Data planes of the network devices are open to the centralized control device, achieving, by means of the centralized control, an objective of improving overall resource utilization. The NFV implements separation of software from hardware, and separation of a control plane from a data plane in a communications network by using a standard virtualization technology, so that software in a network device may be installed, modified, and uninstalled according to a requirement, and the network device becomes a device required by the operator, achieving service expansion.

Currently, a base station as an important component in a wireless communications system has various types, and how to support base stations of multiple types to constitute a complete wireless communications system becomes a problem to be urgently resolved in construction of a new-type wireless network of SDN and NFV.

### SUMMARY

Embodiments of the present invention provide a wireless communications network and device, configured to resolve an existing problem about how to support base stations of multiple types in construction of a new-type network of SDN and NFV.

According to a first aspect, an embodiment of the present invention provides a wireless communications network, including: a single network controller SNC, at least one radio node RN, and at least one function node network FNN, where
the SNC is configured to perform a centralized network control function and a centralized radio control function that are of the wireless communications network;
the at least one RN is configured to perform a function of a base station radio remote unit RRU of at least one base station; and
the FNN is operated in a system using a network function virtualization NFV technology, and is configured to perform some or all functions of wireless protocol stack access stratums of the at least one base station.

In a first possible implementation form of the first aspect, the RN is further configured to perform some functions, determined according to a preset rule, of the wireless protocol stack access stratums of the at least one base station; and
the FNN is specifically configured to perform remaining functions, determined according to the preset rule, of the wireless protocol stack access stratums of the at least one base station, where
the preset rule is a rule for separating layers of the wireless protocol stack access stratums.

With reference to the first possible implementation form of the first aspect, in a second possible implementation form of the first aspect, the FNN or the SNC is further configured to perform a function of a radio resource control RRC layer of the wireless protocol stack access stratums.

With reference to the first aspect, or the first or the second possible implementation manner of the first aspect, in a third possible implementation manner of the first aspect, the SNC is specifically configured to perform one of or a combination of the following functions: functions of a wireless protocol stack non-access stratum NAS and layers above the wireless protocol stack non-access stratum, a flow control function, or a resource group control function.

With reference to the first aspect, or the first, the second or the third possible implementation manner of the first aspect, in a fourth possible implementation manner of the first aspect, the FNN is further configured to perform one of or a combination of the following functions: a data stream processing function, a coordination function, or an interface function.

With reference to the fourth possible implementation manner of the first aspect, in a fifth possible implementation manner of the first aspect, the FNN is specifically configured to perform one of or a combination of the following functions: an adaptation function, a processing function, or an integration function that are of an interface.

With reference to the fifth possible implementation manner of the first aspect, in a sixth possible implementation manner of the first aspect, the FNN is further configured to obtain an interface of the at least one base station of the at least one RN.

With reference to the first aspect, or the first, the second, the third, the fourth, the fifth, or the sixth possible implementation manner of the first aspect, in a seventh possible implementation manner of the first aspect, the wireless communications network further includes at least another RN, configured to perform a function of a base station radio remote unit RRU of at least another base station and all the functions of the wireless protocol stack access stratums.

With reference to the first aspect, or the first, the second, the third, the fourth, the fifth, the sixth or the seventh possible implementation manner of the first aspect, in an eighth possible implementation manner of the first aspect, the base station is a base station in a cellular network, or an access point in a WLAN.

According to a second aspect, an embodiment of the present invention provides a single network controller SNC, configured to perform a function of the foregoing single network controller SNC.

According to a third aspect, an embodiment of the present invention provides a radio node RN, configured to perform a function of the foregoing radio node RN.

According to a fourth aspect, an embodiment of the present invention provides a function node network FNN, configured to perform a function of the foregoing function node network FNN.

According to a fifth aspect, an embodiment of the present invention provides a wireless communications network control device, including: a processor, a memory, and at least one communications port, where
the communications port is configured to communicate with an external device;
the memory is configured to store a computer program instruction; and
the processor is coupled to the memory, and is configured to invoke the computer program instruction stored in the memory, to perform a centralized network control function and a centralized radio control function that are of a wireless communications network.

In a first possible implementation form of the fifth aspect, the processor is further configured to perform a function of a radio resource control RRC layer of the wireless protocol stack access stratums.

With reference to the fifth aspect or the first possible implementation form of the fifth aspect, in a second possible implementation form of the fifth aspect, the processor is specifically configured to perform one of or a combination of the following functions: functions of a wireless protocol stack non-access stratum NAS and layers above the wireless protocol stack non-access stratum, a flow control function, or a resource group control function.

According to a sixth aspect, an embodiment of the present invention provides a wireless communications network processing device, operated in a system using a network function virtualization NFV technology, and including: a processor, a memory, and at least one communications port, where
the communications port is configured to communicate with an external device;
the memory is configured to store a computer program instruction; and
the processor is coupled to the memory, and is configured to invoke the computer program instruction stored in the memory, to perform some or all functions of wireless protocol stack access stratums of at least one base station.

In a first possible implementation form of the sixth aspect, the processor is specifically configured to perform remaining functions, determined according to the preset rule, of the wireless protocol stack access stratums of the at least one base station, where
the preset rule is a rule for separating layers of the wireless protocol stack access stratums.

With reference to the sixth aspect or the first possible implementation form of the sixth aspect, in a second possible implementation form of the sixth aspect, the processor is further configured to perform a function of a radio resource control RRC layer of the wireless protocol stack access stratums.

With reference to the sixth aspect, or the first or the second possible implementation form of the sixth aspect, in a third possible implementation form of the sixth aspect, the processor is further configured to perform one of or a combination of the following functions: a data stream processing function, a coordination function, or an interface function.

With reference to the third possible implementation form of the sixth aspect, in a fourth possible implementation form of the sixth aspect, the processor is specifically configured to perform one of or a combination of the following functions: an adaptation function, a processing function, or an integration function that are of an interface.

With reference to the fourth possible implementation form of the sixth aspect, in a fifth possible implementation manner of the sixth aspect, the processor is further configured to obtain an interface of at least one base station of at least one base station device.

With reference to the sixth aspect, or the first, the second, the third, the fourth, or the fifth possible implementation form of the sixth aspect, in a sixth possible implementation manner of the sixth aspect, the base station is a base station in a cellular network, or an access point in a WLAN. According to the wireless communications network and device provided in the embodiments of the present invention, the wireless communications network includes an SNC performing centralized network control and a centralized radio control function that are of the wireless communications network, an RN performing an RRU function of at least one base station, and an FNN performing functions of wireless protocol stack access stratums in virtualization NFV Based on reasonable division of a control function and a processing function that are of the wireless communications network, a virtualized wireless communications network supports functions of base stations of various types, and centralized control and scheduling are implemented on a resource pool of the wireless communications network.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an embodiment of a wireless communications network according to an embodiment of the present invention;
FIG. 2 is a schematic structural diagram of an embodiment of a wireless communications network control device according to an embodiment of the present invention; and
FIG. 3 is a schematic structural diagram of an embodiment of a wireless communications network processing device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Wireless communications networks provided in embodiments of the present invention are networks obtained after various wireless communications networks are virtualized, for example, current 2G, 3G, and 4G communications networks and a next generation wireless communications network, for example, a Global System for Mobile communications (GSM, Global System for Mobile communications) network, a Code Division Multiple Access (CDMA, Code Division Multiple Access) network, a Time Division Multiple Access (TDMA, Time Division Multiple Access) network, a Wideband Code Division Multiple Access (WCDMA, Wideband Code Division Multiple Access Wireless) network, a Frequency Division Multiple Access (FDMA, Frequency Division Multiple Addressing) network, an Orthogonal Frequency-Division Multiple Access (OFDMA, Orthogonal Frequency-Division Multiple Access) network, a single-carrier FDMA (SC-FDMA) network, a General Packet Radio Service (GPRS, General Packet Radio Service) network, a Long Term Evolution (LTE, Long Term Evolution) network, and another wireless communications network of this type. Various wireless communications network devices provided in the embodiments of the present invention are various virtualized network elements in a virtualized wireless communications network.

A base station mentioned in the embodiments of the present invention is a base station in the foregoing wireless communications networks, for example, a base station including only a function of a radio remote unit (Radio Remote Unit, RRU for short), which is also referred to as an access point (Access Point, AP for short); or a base station including an RRU function and a function of a wireless protocol stack physical layer (Physical Layer, PHY for short) that is also referred to as an L1 layer, for example, a NodeB in a conventional 3G network; or a base station including an RRU function and a function of wireless protocol stack access stratums, where the wireless protocol stack access stratums include: an L1 layer, a data link layer that is also referred to as an L2 layer, and a network layer that is also referred to as an L3 layer, for example, a conventional LTE base station; or a separate base station divided into a resource end function and a control end function, where the resource end function includes an RRU, the control end function includes a base band unit (Base Band Unit, BBU for short), and functions of parts of the wireless protocol stack access stratums are separately deployed in the RRU and the BBU according to a network requirement, for example, a CRAN base station; or a WIFI AP including a function of an RRU, a function of an L1 layer, and a function of an L2 layer, for example, a conventional WIFI AP, or a WIFI AP converging and coordinating with a wireless communications protocol stack, or the like; or base stations of other types occurring with development of the wireless communications network.

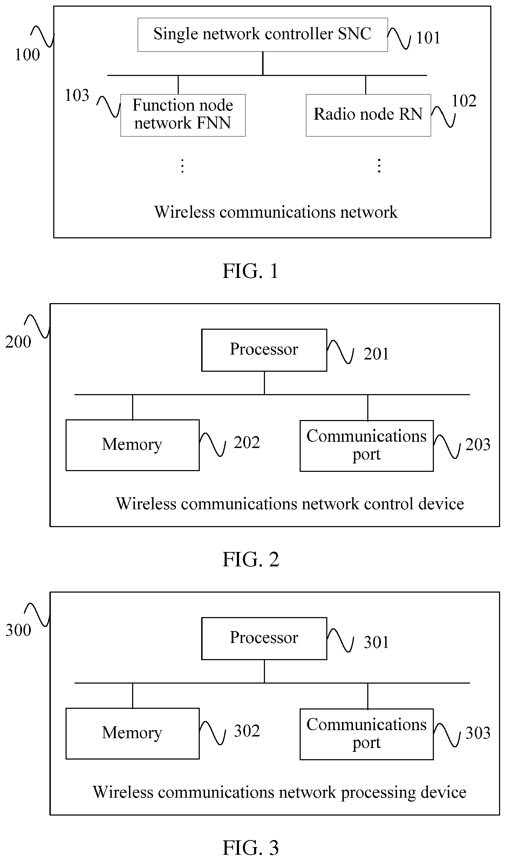

FIG. 1 is a schematic structural diagram of an embodiment of a wireless communications network according to an embodiment of the present invention. As shown in FIG. 1, the wireless communications network 100 includes: a single network controller (Single Network Controller, SNC for short) 101, at least one radio node (Radio Node, RN for short) 102, and at least one function node network (Function Nodes Network, FNN for short) 103.

The SNC 101 is configured to perform a centralized network control function and a centralized radio control function that are of the wireless communications network, the at least one RN 102 is configured to perform a function of a base station radio remote unit RRU of at least one base station, and the FNN 103 is operated in a system using a network function virtualization NFV technology, and is configured to perform some or all functions of wireless protocol stack access stratums of at least one base station.

The SNC, the RN, and the FNN in this embodiment are virtualized network units finishing a function of the wireless communications network in an SDN and NFV network. It should be noted that, the SNC, the RN, and the FNN are only names of network units named for ease of descriptions of this embodiment of the present invention, and are not a limited definition of an implementation of this solution. The wireless communications network provided in this embodiment is applicable to an AP and a separate base station that include only an RRU function. The RN in the wireless communications network is used as an air interface node in the network, and an RN may be configured to perform at least a function of an AP or an RRU function of a separate base station that is separated at the RRU. The functions of the wireless protocol stack access stratums, that is, all or some functions of an L1 layer, an L2 layer, and a radio resource control (Radio Resource Control, RRC for short) layer of an L3 layer that are of the wireless protocol stack access stratums are performed by the FNN in the NFV network. To support the base station of this type, it may be set that an RN performs a function of an AP and another RN performs a function of a separate base station including only an RRU function, or it may be set that an RN separately performs a function of an AP and a function of a separate base station including only an RRU function at different moments, which is not limited in this embodiment.

The base station in the embodiments of the present invention is a base station in a cellular network, or an access point in a WLAN. For example, the base station is a NodeB in a conventional 3G network, or a conventional LTE base station, or a cNB and a uNB in a WiSA architecture, or a separate base station that is separated at any position of the wireless protocol stack access stratums.

In an embodiment of the present invention, the RN 102 is further configured to perform some functions, determined according to a preset rule, of the wireless protocol stack access stratums of the at least one base station, and the FNN 103 is specifically configured to perform remaining functions, determined according to the preset rule, of the wireless protocol stack access stratums of the at least one base station, where the preset rule is a rule for separating layers of the wireless protocol stack access stratums.

Specifically, the wireless protocol stack access stratums include an L1 layer, an L2 layer, and a radio resource control (Radio Resource Control, RRC for short) layer of an L3 layer, and different separate base stations may be constituted by differently separating the wireless protocol stack access stratums.

For ease of descriptions, in this solution, an L_{XY} type base station is used to represent a base station constituted by differently separating layers of the wireless protocol stack access stratums. A resource end function of the separate base station includes: an RRU, functions of an (L_{X})^{th} layer and layers below the (L_{X})^{th} layer that are of the wireless protocol stack access stratums, and Y tenth of a function of an (L_{X+1})^{th} layer of the wireless protocol stack access stratums. The control end function of the separate base station includes: (10-Y) tenth of the function of the (L_{X+1})^{th} layer in a wireless protocol stack and a function of another layer of the wireless protocol stack access stratums, where X is an integer, X∈[0,2], Y is a real number, and Y∈[0,10).

For example, if X=2, and Y=5, that is, the separate base station is an L₂₅ type base station, a resource end of the separate base station includes the RRU, and the L1 layer, the L2 layer, and the radio resource control (Radio Resource Control, RRC for short) layer of the L3 layer that are of the wireless protocol stack access stratums, and correspondingly, a control end of the separate base station includes another 1/2 layer of the L3 layer of the wireless protocol stack access stratums. Alternatively, if X=0, and Y=0, that is, the separate base station is an L₀ type base station, a resource end of the separate base station includes the RRU, and correspondingly, a control end of the separate base station includes the L1 layer, the L2 layer, and the L3 layer of the wireless protocol stack access stratums. If X=1, and Y=0, that is, the separate base station is an L₁₀ type base station, a resource end of the separate base station includes an RRU and the L1 layer of the wireless protocol stack access stratums, and correspondingly, a control end of the separate base station includes the L2 layer and the L3 layer that are of the wireless protocol stack access stratums, and the like.

Using the L₁₀ type base station as an example, it is set that the SNC 101 performs a centralized network control function and a centralized radio control function that are of the wireless communications network, and it is set that the RN performs a function of the RRU and a function of the L1 layer of the wireless protocol stack access stratums and the FNN performs a function of the L2 layer and a function of the RRC layer of the L3 layer that are of the wireless protocol stack access stratums, implementing support of the SDN and NFV network on the L₁₀ type base station, and constituting a complete wireless communications system.

It should be noted that an L_{XY} type base station defined in this embodiment of the present invention is only a base station name introduced for a unified description of all possible separate-type base stations, and the L_{XY} type base station is a base station including all functions of a BBU and an RRU, and at least two relatively independent nodes. For example, the L_{XY} type base station is a WiSA architecture base station that is separated at the L2 layer of the wireless protocol stack access stratums and includes a cNB and a uNB. The uNB includes a function of an RRU and functions of the L1 layer and the L2 layer that are of the wireless protocol stack access stratums, and the cNB includes a function of the RRC of the L3 layer of the wireless protocol stack access stratums; or is a CRAN base station that may be separated at any layer of the wireless protocol stack access stratums, or the like. In this embodiment, X and Y represent only a variety of separation, and do not represent division performed strictly according to a manner, such as a quantity of sub-layers, complexity, and a scale in wireless communications protocol layers. Introduction of X and Y is only a summary description for a base station function defined by a current wireless communications protocol, which is not a limited definition. According to a wireless communications network function virtualization method provided in this embodiment of the present invention, layers of a wireless protocol access stack are properly divided and inherited, so that different virtualized network elements separately finish a control function of the wireless communications network and a processing function of a base station, a virtualized wireless communications network supports functions of base stations of separate types, and centralized control and scheduling are implemented on a resource pool of the wireless communications network.

For the WIFI AP, currently, there are two trends. One trend is a conventional WIFI AP, that is, a WIFI AP having neither a control plane nor a user plane similar to that of a wireless protocol stack, the WIFI AP is similar to the ordinary Internet, but the WIFI AP covers the L2 layer and a portion below the L2 layer, that is, the L1 layer and the RRU. The other trend is a WIFI AP considered to converge and coordinate with a wireless communications protocol stack, the WIFI AP of this type is actually above the L2 layer and is endowed with a function of the control plane, may interact and functionally coordinate with the wireless communications protocol stack, and processes a function procedure, for example, mobility processing, or processing such as authentication based on SIM card information or other wireless information, and the foregoing coordination function needs to be deployed in the FNN.

Similarly, in a development trend of the WIFI AP, similar to a separate base station of the wireless protocol stack, the WIFI AP may also exist in a separate type, and based on a TCP/IP protocol model, may be separated at the L2 layer or layers below the L2 layer, so that an existence type of the separate-type WIFI AP may be any one between L00 and L2y. Correspondingly, the resource end of the WIFI AP may include the RRU and the L1 layer, or only includes the RRU, or includes a function of the RRU, and 1/2 of a function of the L1 layer, or includes a function of the RRU, a function of the L1 layer, and a function of the L2 layer, or the like.

In another embodiment of the present invention, the FNN or the SNC is further configured to perform a function of the radio resource control RRC layer of the wireless protocol stack access stratums.

Specifically, if the base station is an AP or a separate-type base station whose resource end does not include a function of the RRC layer of the wireless protocol stack access stratums, it is set that the FNN performs the function of the RRC layer, or because the SNC is configured to implement centralized control on the wireless communications network, it may be set that the SNC performs the function of the RRC layer, so as to implement further centralization of network control, which is not limited in this embodiment.

In still another embodiment of the present invention, the SNC is specifically configured to perform one of or a combination of the following functions: functions of a wireless protocol stack non-access stratum NAS and layers above the wireless protocol stack non-access stratum, a flow control function, or a resource group control function.

Specifically, the flow control function refers to a decision of a flow processing rule and a decision transmission function, for example, a processing policy of a data stream, a decision function of a processing parameter, and a function for transmitting a decision result to a processing node. The resource group control function refers to a function of assignment, activation and deactivation on a processing node combination, for example, assignment, activation, and deactivation on a logical resource, such as a base station, a sector, or a cell, or a function node combination required when a function, such as coordinated multi-point transmission (Coordinated Multiple Point, CoMP for short), beamforming (BeamForming, BF for short), or multiple-input multiple-output (Multiple Input Multiple Output, MIMO for short) is finished. The functions of the wireless protocol stack non-access stratum NAS and the layers above the wireless protocol stack non-access stratum include functions, such as user access authentication, movement, and bearer management.

In still another embodiment of the present invention, the FNN 103 is further configured to perform one of or a combination of the following functions: a data stream processing function, a coordination function, or an interface function.

In an SDN and NFV network, the FNN finishes a corresponding data stream processing function according to the processing parameter decided by the SNC, for example, functions of detection, compression, encryption, and quantity of service (Quality of Service, QoS for short) assurance that are of a data stream.

For processing of the data stream, the function node has different processing manners, such as serial processing and bypass processing. The serial processing is a general conventional data processing manner, for example, video compression or cross-layer optimization. Data passes through a compression or optimization module, and then is sequentially transmitted to a next processing node. During the bypass processing, multiple copies of data needs to be duplicated at a node, and a rule or a source routing path label needs to have an indication, for example, CoMP and network coding.

The function node may process the data stream by using a same processing policy, or different processing policies. The different processing policies need to be pre-configured or delivered one by one by the SNC. If a pre-configuration manner is used, a data packet header needs to have a processing policy indication, and the function node obtains, by means of an index, a data processing policy according to the processing policy indication. If data streams all have particular processing parameters, the SNC delivers the processing parameters one by one to the function node in a process of building the data streams. The processing policy includes a method for processing a data stream, for example, a compression manner and a compression algorithm during video compression, and further includes a data processing priority. The processing parameters include a specific parameter when a processing manner is used. Function nodes in the FNN may be directly connected to each other, or may be connected by means of an IP network, and data in the IP network may be forwarded in an SDN manner, or in a conventional autonomous manner.

A function, for example, mobility processing or authentication processing based on SIM card information or other wireless information may be finished by means of coordination between function nodes in the FNN or between each function node in the FNN and another function entity.

Further, the FNN 103 is specifically configured to perform one of or a combination of the following functions: an adaptation function, a processing function, or an integration function that are of an interface.

In addition, underlying protocols of the control function and the processing function that are of the wireless communications network are not the same, and corresponding interfaces are also different. Before allocating a control instruction sent by the SNC to a corresponding function node or the RN, the FNN needs to finish interface functions of the SNC, the FNN, and the RN, for example, adaptation, processing, and integration that are of the interfaces. For example, if functions of the RRU and the wireless protocol stack access stratums are deployed in the RN, and the function of the NAS is deployed in the SNC, adaptation to interfaces of the RRU and the wireless protocol stack access stratums, and adaptation to an interface of the NAS layer need to be deployed in the FNN, and data in the NAS layer is parsed, and packetized and converted into a format that can be identified by the RN. In addition, for ease of data interaction processing, if all function nodes in the FNN may use a same protocol, interfaces between all the function nodes in the FNN need to be jointly processed. When the FNN finishes the interface adaptation, the adaptation may be jointly performed, or the adaptation may be separately performed on a user plane and a control plane. Connection to various base stations of the RN is finished on the user plane, and connection to the SNC is finished on the control plane.

In a possible implementation manner of this embodiment of the present invention, the FNN 103 is further configured to obtain an interface of the at least one base station of the at least one RN.

For example, if different types of conventional base stations or separate base stations are separately deployed in the RN, adaptation, processing, and integration functions that are of the interface in the FNN further include adaptation, processing, and integration that are of RN interfaces of multiple types. Because the RNs of multiple types coexist, interfaces to which the FNN needs to adapt include an interlayer interface, an intra-layer interface, another separate interface, or a user-defined interface. Because these interfaces may coexist, the FNN further includes a function for obtaining various types of base stations deployed in the RN.

It should be noted that, because base stations have multiple types, convergence support or separation support may be used as a manner of support of the SDN and NFV network on base stations of multiple types. The convergence support refers to that convergence is considered at a layer, for example, convergence at the NAS layer uses a protocol stack of a standard as a reference, or based on various protocol stacks that need support, a new protocol layer is redesigned and constructed. Below the converged protocol layer, processing layers of base stations of various types are independent and inherited. Above the protocol layer, processing functions and processes are the same or similar. The support type needs to consider interface adaptation and function convergence. The separation support refers to processing at layers, independence of protocol stack related processing of the layers is kept, and converged adaptation of layers and enhanced integration of interfaces are basically not considered. The support type needs to consider all support of multiple protocol stack related interfaces.

Regardless of which support manner is used, because base stations have multiple types, interfaces of the RN and the FNN may have multiple types, and a quantity of each type of interfaces is uncertain. Interfaces of the FNN and the SNC depend on deployment positions of the RRC layer and a related radio resource control layer. If the RRC layer and the related radio resource control layer only need to be deployed in the FNN, the interfaces are relatively single, or if the RRC layer and the related radio resource control layer are deployed both in the FNN and the SNC, the interfaces need to support hybrid support on both the two deployment related layers.

In another possible implementation form of this embodiment, the wireless communications network further includes at least another RN, configured to perform a function of a base station radio remote unit RRU of at least another base station and all the functions of the wireless protocol stack access stratums.

A conventional base station in this embodiment is a base station defined in a standard protocol, for example, an LTE base station, including functions of an RRU and wireless protocol stack access stratums. It should be noted that, the LTE base station has a same function as that of an L₂₅ type separate base station of a separate type. In an SDN and NFV network, it may be set that an RN performs a function of the LTE base station, it may be set that the FNN performs a corresponding data stream processing function and/or an interface function, and it may be set that an SNC performs functions of a wireless protocol stack non-access stratum NAS and layers above the wireless protocol stack non-access stratum, a flow control function and/or a resource group control function, to support the LTE base station.

According to the wireless communications network provided in this embodiment of the present invention, the wireless communications network includes an SNC performing centralized network control and a centralized radio control function that are of the wireless communications network, an RN performing an RRU function of at least one base station, and an FNN performing functions of wireless protocol stack access stratums in virtualization NFV Based on reasonable division of a control function and a processing function that are of the wireless communications network, a virtualized wireless communications network supports functions of base stations of various types, and centralized control and scheduling are implemented on a resource pool of the wireless communications network.

FIG. 2 is a schematic structural diagram of an embodiment of a wireless communications network control device according to an embodiment of the present invention. As shown in FIG. 2, the network control device 200 includes: a processor 201, a memory 202, and at least one communications port 203.

The communications port 203 is configured to communicate with an external device; the memory 202 is configured to store a computer program instruction; the processor 201 is coupled to the memory 202, and is configured to invoke the computer program instruction stored in the memory 202, to perform a centralized network control function and a centralized radio control function that are of a wireless communications network.

Specifically, the processor 201 is further configured to perform a function of a radio resource control RRC layer of wireless protocol stack access stratums.

The processor 201 is specifically configured to perform one of or a combination of the following functions: functions of a wireless protocol stack non-access stratum NAS and layers above the wireless protocol stack non-access stratum, a flow control function, or a resource group control function.

The wireless communications network control device in this embodiment is a device finishing centralized network control and centralized wireless control that are of the wireless communications network in an SDN and NFV network, a function principle of the device is similar to a function of the SNC in the wireless communications network provided in FIG. 1, and details are not described herein again.

The communications port, the memory, and the processor mentioned in this embodiment are virtualized functional modules, configured to implement a function same as or similar to that of a physical functional module. For example, the communications port is configured to implement communication between the wireless communications network control device and a wireless communications network processing device, the processor is configured to perform integrated scheduling and control on resources of the wireless communications network, to better optimize use of the network resources, and the memory is configured to store a related instruction.

According to the wireless communications network control device provided in this embodiment of the present invention, a control function and a processing function that are of a wireless communications network are properly divided, the wireless communications network control device jointly finishes network control and a radio control function that are of the wireless communications network, a virtualized wireless communications network supports functions of base stations of various types, and centralized control and scheduling are implemented on a resource pool of the wireless communications network.

FIG. 3 is a schematic structural diagram of an embodiment of a wireless communications network processing device according to the present invention. As shown in FIG. 3, the wireless communications network processing device 300 is operated in a system using a network function virtualization NFV technology, and includes a processor 301, a memory 302, and at least one communications port 303, where
the communications port 303 is configured to communicate with an external device; the memory 302 is configured to store a computer program instruction; the processor 301 is coupled to the memory 302, and is configured to invoke the computer program instruction stored in the memory 302, to perform some or all functions of wireless protocol stack access stratums of at least one base station.

Specifically, the processor 301 is specifically configured to perform remaining functions, determined according to a preset rule, of the wireless protocol stack access stratums of the at least one base station, where the preset rule is a rule for separating layers of the wireless protocol stack access stratums.

In an implementation manner of this embodiment, the processor 301 is further configured to perform a function of a radio resource control RRC layer of the wireless protocol stack access stratums.

In another implementation manner of this embodiment, the processor 301 is further configured to perform one of or a combination of the following functions: a data stream processing function, a coordination function, or an interface function.

Specifically, the processor 301 is specifically configured to perform one of or a combination of the following functions: an adaptation function, a processing function, or an integration function that are of an interface.

In still another implementation manner of this embodiment, the processor is further configured to obtain an interface of at least one base station of at least one base station device.

In the implementation manners of this embodiment, the base station is a base station in a cellular network, or an access point in a WLAN.

A specific function of the wireless communications network processing device provided in this embodiment is similar to the function of the FNN in the embodiment of the wireless communications network provided in the present invention. For a specific implementation of the function of the wireless communications network processing device, reference may be made to the detailed descriptions of the foregoing embodiment of the wireless communications network, and details are not described herein again.

The communications port, the memory, and the processor mentioned in this embodiment are virtualized functional modules, configured to implement a function same as or similar to that of a physical functional module. For example, the communications port is configured to implement communication between the wireless communications network processing device and a wireless communications network control device, and between various types of base stations in the wireless communications network, and the processor is configured to receive a control instruction of the wireless communications network control device, process a corresponding service, and finish functions of the wireless protocol stack access stratums together with a base station in the wireless communications network, and the like.

According to the wireless communications network processing device provided in this embodiment, the wireless communications network processing device is operated in a system using a network function virtualization NFV technology, and performs some or all functions of wireless protocol stack access stratums of a base station, implementing support of an NFV network on base stations of various types. A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A wireless communications network, comprising a single network controller SNC, at least one radio node RN, and at least one function node network FNN, wherein
the SNC is configured to perform a centralized network control function and a centralized radio control function that are of the wireless communications network;
the at least one RN is configured to perform a function of a base station radio remote unit RRU of at least one base station; and
the FNN is operated in a system using a network function virtualization NFV technology, and is configured to perform some or all functions of wireless protocol stack access stratums of the at least one base station.

2. The wireless communications network according to claim 1, wherein
the RN is further configured to perform some functions, determined according to a preset rule, of the wireless protocol stack access stratums of the at least one base station; and
the FNN is specifically configured to perform remaining functions, determined according to the preset rule, of the wireless protocol stack access stratums of the at least one base station, wherein
the preset rule is a rule for separating layers of the wireless protocol stack access stratums.

3. The wireless communications network according to claim 2, wherein
the FNN or the SNC is further configured to perform a function of a radio resource control RRC layer of the wireless protocol stack access stratums.

4. The wireless communications network according to any one of claims 1 to 3, wherein the SNC is specifically configured to perform one of or a combination of the following functions: functions of a wireless protocol stack non-access stratum NAS and layers above the wireless protocol stack non-access stratum, a flow control function, or a resource group control function.

5. The wireless communications network according to any one of claims 1 to 4, wherein
the FNN is further configured to perform one of or a combination of the following functions: a data stream processing function, a coordination function, or an interface function.

6. The wireless communications network according to claim 5, wherein the FNN is specifically configured to perform one of or a combination of the following functions: an adaptation function, a processing function, or an integration function that are of an interface.

7. The wireless communications network according to claim 6, wherein the FNN is further configured to obtain an interface of the at least one base station of the at least one RN.

8. The wireless communications network according to any one of claims 1 to 7, further comprising at least another RN, configured to perform a function of a base station radio remote unit RRU of at least another base station and all the functions of the wireless protocol stack access stratums.

9. The wireless communications network according to any one of claims 1 to 8, wherein
the base station is a base station in a cellular network, or an access point in a WLAN.

10. A single network controller SNC, configured to perform a function of the single network controller SNC according to any one of claims 1 to 9.

11. A radio node RN, configured to perform a function of the radio node RN according to any one of claims 1 to 9.

12. A function node network FNN, configured to perform a function of the function node network FNN according to any one of claims 1 to 9.

13. A wireless communications network control device, comprising: a processor, a memory, and at least one communications port, wherein
the communications port is configured to communicate with an external device;
the memory is configured to store a computer program instruction; and
the processor is coupled to the memory, and is configured to invoke the computer program instruction stored in the memory, to perform a centralized network control function and a centralized radio control function that are of a wireless communications network.

14. The wireless communications network control device according to claim 13, wherein the processor is further configured to perform a function of a radio resource control RRC layer of the wireless protocol stack access stratums.

15. The wireless communications network control device according to either claim 13 or 14, wherein the processor is specifically configured to perform one of or a combination of the following functions: functions of a wireless protocol stack non-access stratum NAS and layers above the wireless protocol stack non-access stratum, a flow control function, or a resource group control function.

16. A wireless communications network processing device, operated in a system using a network function virtualization NFV technology, and comprising: a processor, a memory, and at least one communications port, wherein
the communications port is configured to communicate with an external device;
the memory is configured to store a computer program instruction; and
the processor is coupled to the memory, and is configured to invoke the computer program instruction stored in the memory, to perform some or all functions of wireless protocol stack access stratums of at least one base station.

17. The wireless communications network processing device according to claim 16, wherein the processor is specifically configured to perform remaining functions, determined according to the preset rule, of the wireless protocol stack access stratums of the at least one base station, wherein
the preset rule is a rule for separating layers of the wireless protocol stack access stratums.

18. The wireless communications network processing device according to claim 16 or 17, wherein the processor is further configured to perform a function of a radio resource control RRC layer of the wireless protocol stack access stratums.

19. The wireless communications network processing device according to any one of claims 16 to 18, wherein the processor is further configured to perform one of or a combination of the following functions: a data stream processing function, a coordination function, or an interface function.

20. The wireless communications network processing device according to claim 19, wherein the processor is specifically configured to perform one of or a combination of the following functions: an adaptation function, a processing function, or an integration function that are of an interface.

21. The wireless communications network processing device according to claim 20, wherein the processor is further configured to obtain an interface of at least one base station of at least one base station device.

22. The wireless communications network processing device according to any one of claims 16 to 21, wherein the base station is a base station in a cellular network, or an access point in a WLAN.
